# FASCICULE DE BREVET EUROPEEN

(11) **EP 3 154 824 B1**
(45) Date de publication et mention de la délivrance du brevet: **28.08.2019**
(21) Numéro de dépôt: 15732786.7
(22) Date de dépôt: 22.05.2015
(51) Int. Cl.: B60R 9/04, B62D 25/00, B62D 25/06, B62D 27/02, B60R 21/13

(54) **ENSEMBLE D'ELEMENTS DE SUPPORT DE CHARGE**
SATZ VON LASTTRAGENDEN ELEMENTEN
ELEMENTS ASSEMBLY FOR SUPPORTING LOAD

(30) Priorité: 10.06.2014 FR 1455211
(43) Date de publication de la demande: 19.04.2017
(73) Titulaire: Renault s.a.s, 92100 Boulogne-Billancourt (FR)
(72) Inventeur: STOINEA, Gheorghita, Bucuresti (RO); ORTMEN, Halil, Bucuresti (RO); DUMITRESCU, Mihai-Dan, Bucuresti (RO); CALTUN, Adrian, Jud Ilfov Otopeni (RO)
(86) Numéro de dépôt international: PCT/FR2015/051363
(87) Numéro de publication internationale: WO 2015/189493

(56) Documents cités:
- EP-A1- 1 842 728
- DE-A1- 4 316 947
- DE-U1- 8 714 471
- US-A- 6 152 339

## Description

La présente invention concerne un ensemble d'éléments de support de charge. L'invention concerne également un véhicule, notamment un véhicule automobile, comprenant un tel ensemble d'éléments de support de charge.

Dans le cadre d'une utilisation particulière et tolérée d'un véhicule notamment automobile, un utilisateur peut augmenter un volume de chargement à partir d'un ensemble d'éléments de support de charge destiné à être monté sur le dessus d'un pavillon du véhicule. Cet ensemble d'éléments de support comprend généralement deux barres de toit pourvues à chaque extrémité d'une partie formant pied de fixation sur le pavillon. Il est aussi connu par DE8714471-U1 un ensemble de support de charge destiné à être monté sur un véhicule découvrable par des pieds de fixation destinés à être fixés à un montant de baie ou à un arceau de sécurité du véhicule.

Certains véhicules automobiles sont équipés d'ensembles d'éléments de support de charge dont les barres de toit s'étendant parallèlement à l'axe longitudinal du véhicule, sont montées à demeure pour servir de support à des éléments transversaux pour la fixation par exemple d'une galerie, d'un coffre de voyage ou d'autres accessoires.

Toutefois un des inconvénients majeurs de tels ensembles d'éléments de support de charge est, du fait de leur architecture, qu'ils sont limités en termes de volume et capacité de charge qu'ils peuvent supporter.

La présente invention propose un ensemble d'éléments de support de charge éliminant les inconvénients ci-dessus de l'ensemble connu.

Compte tenu de ce qui précède, un problème que se propose de résoudre l'invention est de fournir un ensemble d'éléments de support de charge destiné à un véhicule notamment automobile, dont la résistance à l'effort est améliorée et qui satisfasse aux contraintes de style, d'esthétisme et de réduction des coûts de plus en plus contraignantes exigées par les constructeurs automobiles. De plus, cet ensemble d'éléments de support de charge est d'un montage aisé.

En outre, l'assemblage d'un tel ensemble d'éléments de support de charge au niveau de la caisse du véhicule pourra être effectué en optimisant l'efficacité et la productivité du personnel ou de robots ayant la charge d'assurer le montage.

Dans ce dessein, l'invention concerne un ensemble d'éléments de support de charge monté sur la caisse d'un véhicule comprenant des première et deuxième barres de toit et un arceau de sécurité formé de premier, deuxième et troisième éléments structurels, les première et deuxième barres de toit sont respectivement assemblées avec les premier et troisième éléments structurels et les deuxième et troisième éléments structurels à partir d'un module d'assemblage comprenant un corps pourvu de premier et deuxième éléments d'accouplement aptes à coopérer respectivement avec une extrémité arrière de la barre de toit et une extrémité avant du premier ou du deuxième élément structurel, le module d'assemblage comprenant un troisième élément d'accouplement apte à coopérer avec une extrémité du troisième élément structurel.

Dans d'autres modes de réalisation :
- le module d'assemblage comprend un support de fixation agencé dans le corps du module d'assemblage ;
- le module d'assemblage comprend un élément de protection susceptible d'être monté sur le corps, lequel élément de protection est pourvu de composantes de fixation aptes à coopérer avec d'autres composantes de fixation complémentaires comprises dans un support de fixation ;
- le troisième élément d'accouplement comprend une première partie qui est apte à traverser une ouverture aménagée dans une face latérale du corps pour coopérer avec ladite extrémité du troisième élément structurel et une deuxième partie qui est fixée au corps ;
- le corps et le troisième élément d'accouplement compris dans le module d'assemblage sont fixés à la caisse du véhicule à partir d'un dispositif de fixation comportant notamment une vis coopérant avec un écrou à rattrapage de jeu ;
- des extrémités avant des première et deuxième barres de toit et des extrémités arrière des premier et deuxième éléments structurels sont respectivement reliées à la caisse à partir de premier et deuxième modules de fixation avant et arrière.

L'invention concerne aussi un véhicule comprenant un tel ensemble d'éléments de support de charge.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 est une vue d'un ensemble d'éléments de support charge selon le mode de réalisation de l'invention ;
- les figures 2A et 2B sont des vues de côté d'un véhicule pourvu d'un ensemble d'éléments de support de charge selon le mode de réalisation de l'invention ;
- les figures 3 et 4 représentent respectivement une vue agrandie de la partie A du véhicule sur la figure 2A et de la partie B du véhicule sur la figure 2B ;
- les figures 5 et 6 représentent des vues de l'intérieur du véhicule de la partie A sur la figure 2A et de la partie B sur la figure 2B selon le mode de réalisation de l'invention ;
- les figures 7 à 11 sont des vues d'un module d'assemblage dépourvu d'un élément de protection selon le mode de réalisation de l'invention ;
- la figure 12 représente un dispositif de fixation comprenant une vis et un écrou à rattrapage à jeu selon le mode de réalisation de l'invention ;
- les figures 13 et 14 illustrent des vues d'un module de fixation arrière selon le mode de réalisation de l'invention ;
- la figure 15 est une vue du module de fixation arrière dépourvu d'un élément de protection selon le mode de réalisation de l'invention, et
- la figure 16 est une vue d'un module de fixation avant dépourvu d'un élément de protection selon le mode de réalisation de l'invention.

Dans la description, les termes :
- « avant », « arrière » s'entendent par rapport aux orientations habituelles et au sens de marche normal d'un véhicule,
- « longitudinal » est défini selon la direction dans laquelle s'étend une caisse de véhicule correspondant à sa longueur ;
- « transversal » est défini selon une direction sensiblement perpendiculaire à la direction longitudinale et correspondant à la largeur de la caisse, et
- « latéral » caractérise par exemple un élément disposé près de l'un des côtés, droit ou gauche, du véhicule.

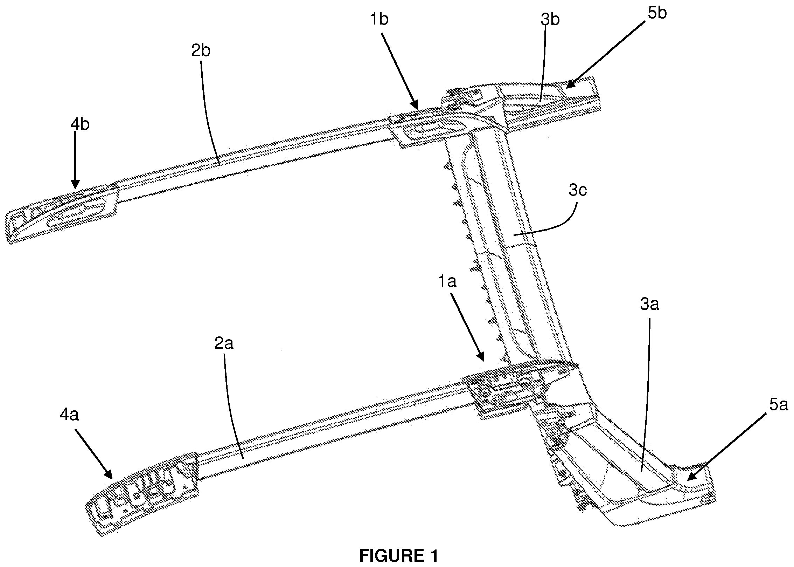

Dans ce mode de réalisation de l'invention illustré sur la figure 1, l'ensemble d'éléments de support de charge est conçu pour être monté sur un véhicule automobile tel qu'une camionnette comprenant une partie formant cabine et une partie de chargement de cargaison ayant un plancher de chargement bornée de côté latéraux 25 et s'étendant vers une extrémité arrière de la partie formant cabine pour charger différentes cargaisons sur le plancher de chargement.

Un élément formant panneau 28 de cabine s'élève entre la partie formant cabine et la partie de chargement de cargaison pour diviser la partie formant cabine et la partie de chargement de cargaison. Ce panneau 28 de cabine peut-être pourvue d'une lunette arrière.

Cet ensemble d'éléments de support de charge est monté sur des parties de la caisse du véhicule comportant la partie formant cabine, le panneau 28 de cabine et la partie de chargement de cargaison du véhicule.

Cet ensemble d'éléments de support de charge est formé de barres de toit 2a, 2b et d'un arceau de sécurité, autrement appelé barres Saint-Antoine.

Cet ensemble d'éléments de support de charge s'étendant dans une direction longitudinale sur la caisse du véhicule, comporte des modules de fixation avant 4a, 4b et arrière 5a, 5b, autrement appelés pieds de fixation, et des modules d'assemblage 1a, 1b permettant notamment d'assurer la fixation de cet ensemble sur la cabine du véhicule.

Plus particulièrement dans ce mode de réalisation, l'ensemble d'éléments de support de charge comprend des première et deuxième barres de toit 2a, 2b qui sont couplées avec l'arceau de sécurité, en particulier avec des premier 3a, deuxième 3b et troisième 3c éléments structurels, ainsi que des premier et deuxième modules de fixation avant 4a, 4b et arrière 5a, 5b, et des premier et deuxième modules d'assemblage 1a, 1b.

L'arceau de sécurité formé par l'assemblage des premier 3a, deuxième 3b et troisième 3c éléments structurels, a la forme d'un U inversé lorsqu'il est monté sur le véhicule à proximité du panneau 28 de cabine. On notera que dans cette configuration, les éléments structurels 3a, 3b, 3c formant cet arceau de sécurité sont compris dans un même plan qui est sensiblement parallèle au panneau 28 de cabine. De plus, les premier 3a et deuxième 3b éléments structurels sont de la même longueur. Le troisième 3c élément structurel présente une longueur qui est sensiblement supérieure à celle des premier 3a et deuxième 3b éléments structurels et s'étend du premier 3a au deuxième 3b élément structurel selon une direction transversale.

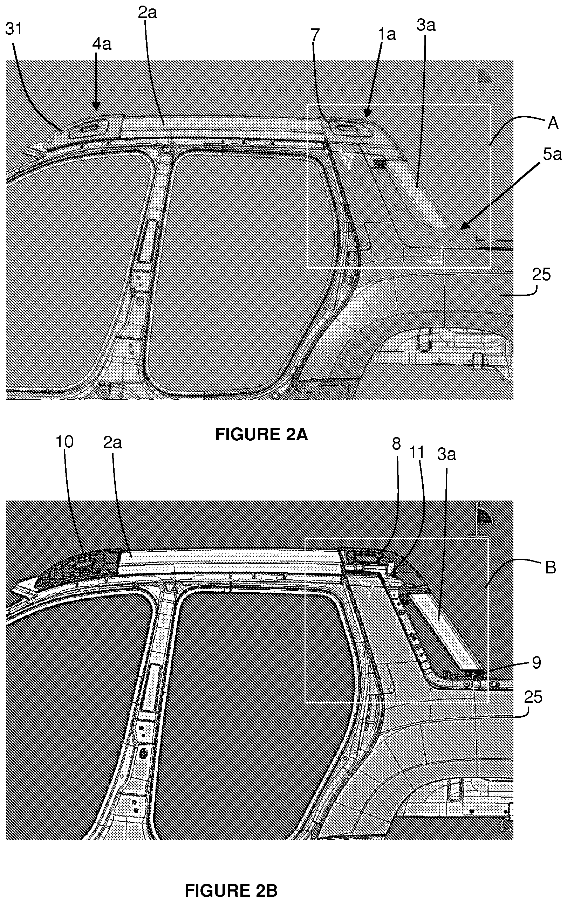

Sur les figures 1, 2A et 2B, la première 2a, ou deuxième 2b, barre de toit est pourvue d'extrémités avant et arrière qui sont respectivement couplées au premier 4a, ou deuxième 4b, module de fixation avant et au premier 1a, ou deuxième 1b, module d'assemblage.

Ces premier 4a et deuxième 4b modules de fixation avant sont reliés mécaniquement à la caisse au niveau du bord avant du pavillon 6 de la partie formant cabine.

Les premier 1a et deuxième 1b modules d'assemblage sont également reliés mécaniquement à la caisse du véhicule au niveau du bord arrière du pavillon 6.

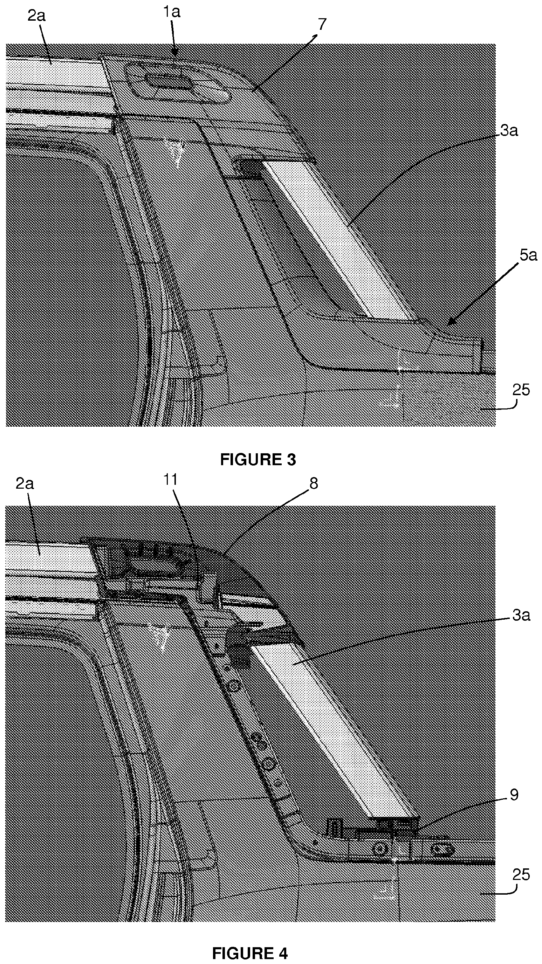

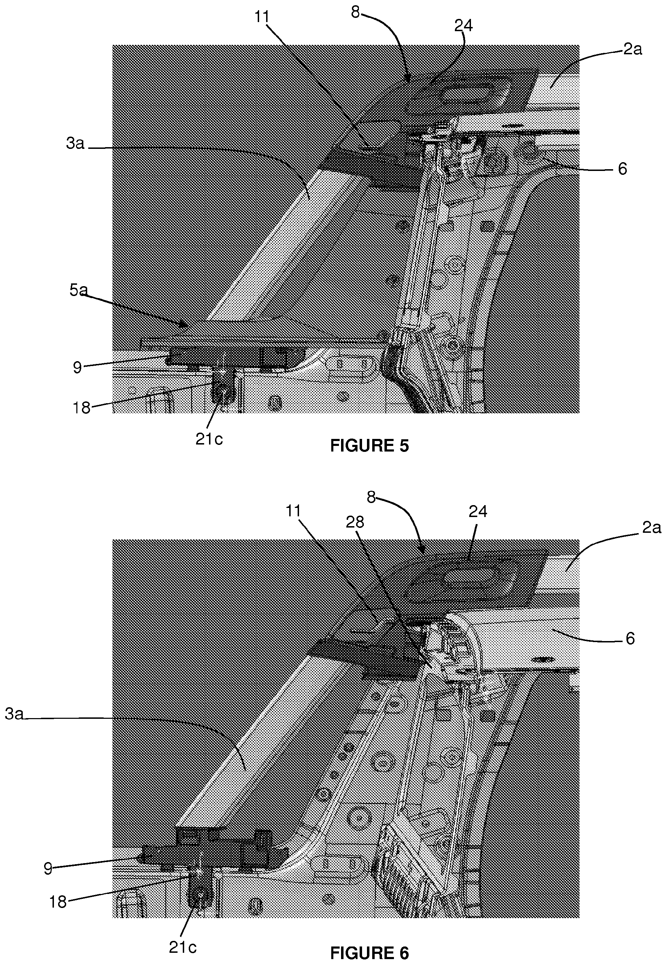

Aux parties A et B sur respectivement les figures 2A et 2B illustrées sur les figures 3 et 4 ainsi que sur les figures 5 et 6, le premier 3a, ou le deuxième 3b, élément structurel comprend des extrémités avant et arrière qui sont respectivement couplées au premier 1a, ou deuxième 1b, module d'assemblage et au premier 5a, ou deuxième 5b, module de fixation arrière.

Sur la figure 1, le troisième élément structurel 3c est pourvu de deux extrémités qui sont couplés pour l'un au premier module d'assemblage 1a et pour l'autre au deuxième module d'assemblage 1b.

Sur les figures 1, 2A et 2B, les première 2a et deuxième 2b barres de toit sont agencées parallèlement et longitudinalement sur le pavillon 6 de la cabine du véhicule. Elles sont respectivement situées au niveau de chaque bord latéral du pavillon 6. On notera que ces première 2a et deuxième 2b barres de toit sont sensiblement de la même longueur.

Les première 2a et deuxième 2b barres de toit ainsi que les premier 3a, deuxième 3b et troisième 3c éléments structurels sont des tubes profilés ayant un corps creux de section de préférence rectangulaire. Alternativement, cette section peut être de forme carrée ou encore circulaire. De tels tubes sont réalisés dans des matières présentant de bonnes propriétés mécaniques : légère, rigide et/ou résistante. Ces matières correspondent par exemple à du plastique ou encore du métal. Les extrémités des première 2a et deuxième 2b barres de toit ainsi que des premier 3a, deuxième 3b et troisième 3c éléments structurels définissent chacune un logement dans lequel est reçu un élément d'accouplement 12a, 12b, 12c, 19, 20.

Ainsi que nous l'avons vu et en référence à la figure 1, chaque barre de toit 2a, 2b est assemblée avec deux éléments structurels 3a, 3b, 3c de l'arceau de sécurité à partir du module d'assemblage 1a, 1b :
- le premier module d'assemblage 1a relie la première barre de toit 2a et les premier 3a et troisième 3c éléments structurels, et
- le deuxième module d'assemblage 1b relie la deuxième 2b barre de toit et les deuxième 3b et troisième 3c éléments structurels.

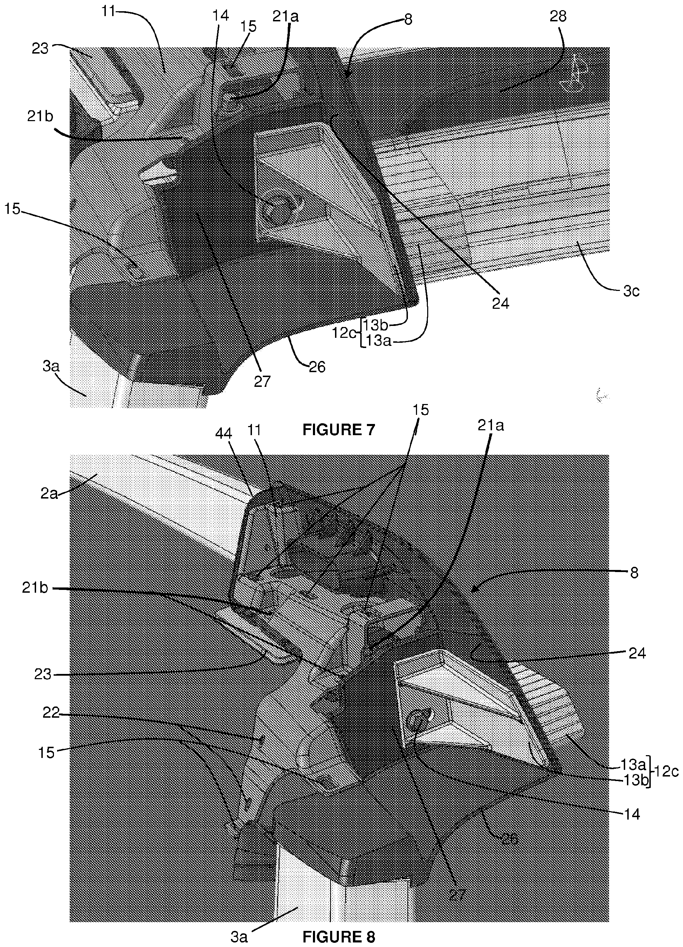

Sur les figures 7 à 11, les premier 1a et deuxième 1b modules d'assemblage comprennent chacun un corps 8 de module d'assemblage 1a, 1b associé à un élément de protection 7.

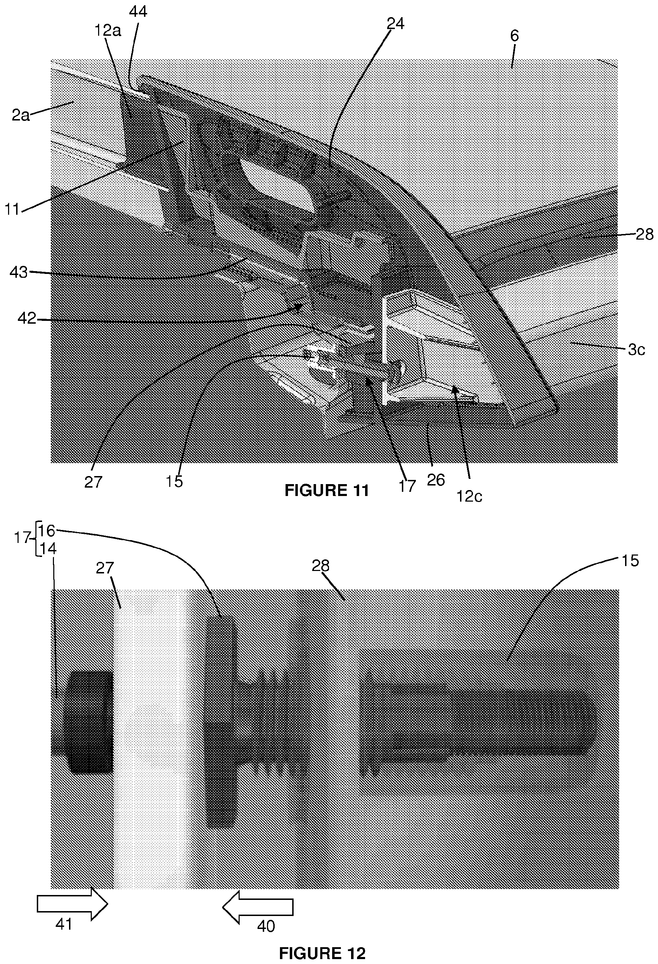

Ce corps 8 comprend une face de liaison 42, visible sur la figure 11, dont une partie de la surface présente une forme sensiblement complémentaire à celle d'une zone de la carrosserie de la cabine formée par le bord arrière du pavillon 6 et le panneau 28 de la cabine du véhicule.

En particulier, cette face de liaison 42 comporte de manière non limitative et non exhaustive des première 43, deuxième 27 et troisième 26 parties comprises dans des plans différents. Lorsque chaque module d'assemblage 1a, 1b est agencé au niveau de ladite zone de carrosserie :
- la première partie 43 de cette face de liaison est alors agencée en regard du pavillon 6 ;
- la deuxième partie 27 en regard du panneau 28 de cabine, et
- la troisième partie 26 en regard du côté latéral 25 bornant la partie de chargement du véhicule.

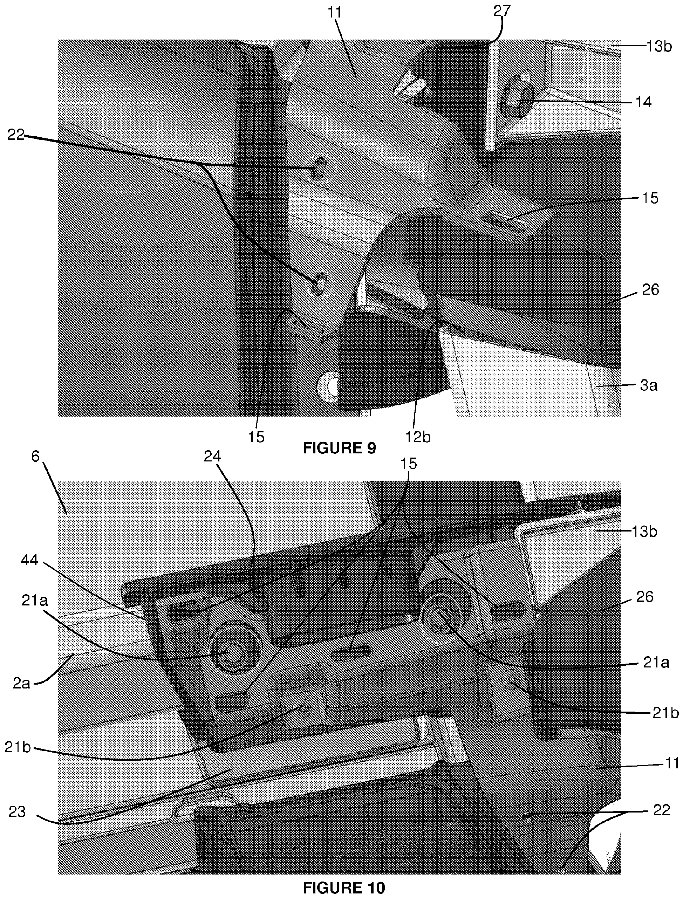

La face de liaison 42 est pourvue sur tout ou partie de la surface de sa première partie 43, susceptible d'être en contact avec le pavillon 6, d'un revêtement 23 en matière élastomère, visible sur les figures 8 et 10, laquelle permet notamment de contribuer à une fixation robuste de chacun de ces premier 1a et deuxième 1b modules d'assemblage sur le pavillon 6.

Sur les figures 8, 10 et 11, cette face de liaison 42 ainsi que des faces avant 44 et latérale 24 dont est pourvu ce corps, sont communes à celles de chaque module d'assemblage 1a, 1b. L'autre face latérale de chacun ces modules d'assemblage 1a, 1b, étant comprise au niveau de l'élément de protection 7 visible sur la figure 2A.

L'élément de protection 7 de chaque module d'assemblage 1a, 1b comprend au niveau de sa face intérieure des composantes de fixation (non représentées) qui contribuent à son verrouillage lorsqu'il est monté sur le corps 8 de chaque module d'assemblage 1a, 1b.

Sur les figures 8 et 10, chacun des premier 1a et deuxième 1b modules d'assemblage comprend un support de fixation 11, de préférence amovible, qui est agencé au niveau du corps 8 de chaque module d'assemblage 1a, 1b. Ce support de fixation 11 est fixé au corps 8 de chaque module d'assemblage 1a, 1b au moyen d'éléments de fixation 21b. Ce support de fixation 11 comprend des composantes de fixation 15 complémentaires à celles de l'élément de protection 7. A titre d'exemple dans le présent mode de réalisation illustré sur les figures 7 à 11, le support de fixation 11 comporte par exemple six composantes de fixation 15 complémentaires correspondant à des ouvertures de forme rectangulaire. Ce support de fixation 11 comprend également des orifices 22 destinés à permettre sa fixation sur la caisse du véhicule à partir d'éléments de fixation (non représentés).

Chaque module d'assemblage 1a, 1b comprend également des premier 12a, et deuxième 12b éléments d'accouplement, visibles sur les figures 9 et 11, permettant d'assurer une liaison mécanique avec respectivement la première 2a, ou deuxième 2b, barre de toit et le premier 3a, ou deuxième 3b, élément structurel.

Sur la figure 11, le premier élément d'accouplement 12a correspond à une zone faisant saillie au niveau de la surface de la face avant 44 du corps 8 de chaque module d'assemblage 1a, 1b.

Sur la figure 9, le deuxième élément d'accouplement 12b correspond à une zone faisant saillie au niveau de la surface de la troisième partie 26 de la face de liaison 42 du corps 8 de chaque module d'assemblage 1a, 1b.

Ces premier 12a et deuxième 12b éléments d'accouplement sont aptes à être couplés respectivement avec l'extrémité arrière de la première 2a, ou deuxième 2b, barre de toit et l'extrémité avant du premier 3a, ou deuxième 3b, élément structurel en étant insérés ou encore emboîtés dans le logement formé par chacune de ces extrémités.

On notera que chacune de ces zones faisant saillie présente une section dont la forme est sensiblement complémentaire à celle du logement défini par l'extrémité arrière de la première 2a, ou deuxième 2b, barre de toit et par l'extrémité avant du premier 3a, ou deuxième 3b, élément structurel afin d'assurer une liaison mécanique robuste.

Chaque module d'assemblage 1a, 1b comprend également un troisième élément d'accouplement 12c, visible sur les figures 7, 8 et 11, qui est amovible. Ce troisième élément d'accouplement 12c est formé d'une première partie 13a qui est apte à traverser une ouverture aménagée dans la face latérale 24 du corps 8 de module d'assemblage 1a, 1b à proximité de la troisième partie 26 de la face de liaison 42. Cette première partie 13a de ce troisième élément d'accouplement 12c est apte à coopérer avec une des deux extrémités du troisième élément structurel 3c en étant inséré ou emboîté dans le logement formé au niveau de cette extrémité. Ce troisième élément d'accouplement 12c comporte une deuxième partie 13b qui est prévue pour être fixée au corps 8 de chaque module d'assemblage 1a, 1b au niveau de la deuxième partie 27 de la face de liaison 42 de ce corps 8 à partir d'un dispositif de fixation 17.

Ainsi que nous l'avons vu précédemment, l'ensemble d'éléments de support de charge comprend les premier 5a et deuxième 5b modules de fixation arrière qui sont aptes à être couplés avec les extrémités arrière des premier 3a et deuxième 3b éléments structurels de sorte à assurer leur fixation au niveau des côtés latéraux 25 du véhicule bornant la partie de chargement de cargaison de ce dernier.

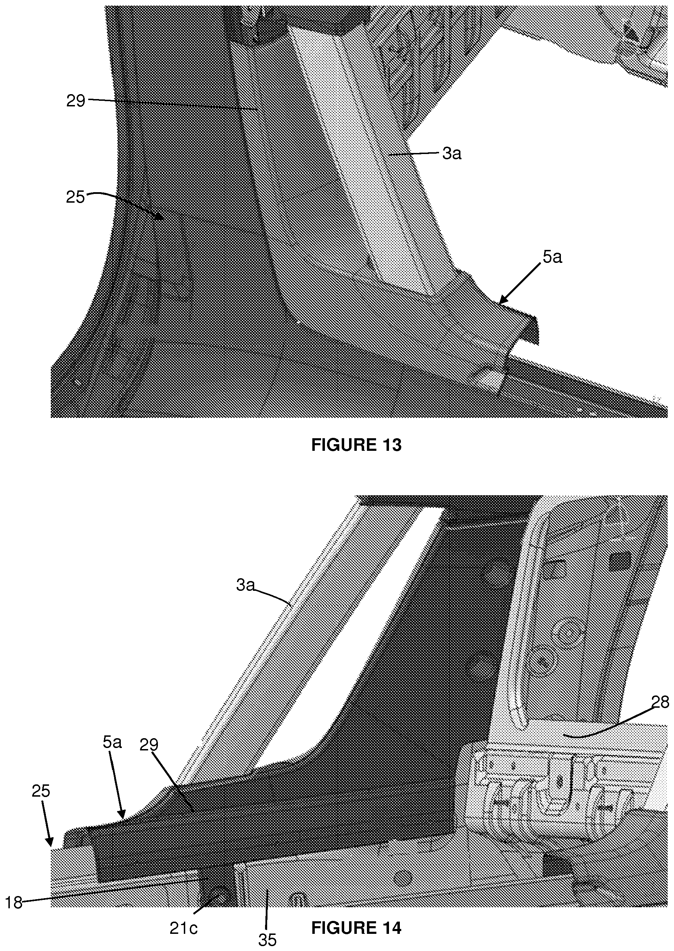

Chaque module de fixation arrière 5a, 5b comprend un élément de protection 29, visible notamment sur les figures 13 et 14, qui est susceptible d'englober le corps 9 de chacun de ces modules de fixation arrière 5a, 5b, en étant constitué de deux parties associées l'une à l'autre à partir d'élément de fixation (non représentés).

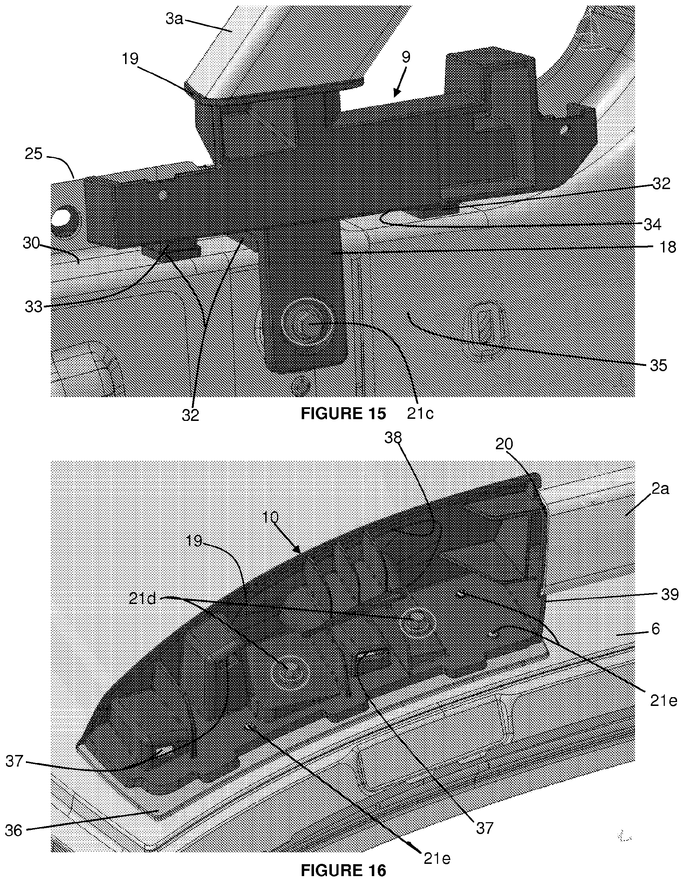

Sur la figure 15, le corps 9 de chacun de ces premier 5a et deuxième 5b modules de fixation arrière comprend une face de maintien 34 définie pour coopérer avec chaque côté latéral 25. Pour ce faire, cette face de maintien 34 comporte au moins une zone 33 faisant saillie au niveau de sa surface qui est susceptible de prendre appui sur une surface d'accueil 30 sensiblement plane et horizontale aménagée au niveau du côté latéral 25. La surface de chaque zone 33 en regard de la surface d'accueil 30 étant pourvue d'un revêtement 32 en matière élastomère qui est susceptible d'améliorer le maintien du corps 9 sur cette surface d'accueil 30.

Le corps 9 de chacun de ces modules de fixation arrière 5a, 5b comprend également un élément de liaison 18 apte à être fixé sur la paroi intérieure 35 du côté latéral 25 à partir d'un élément de fixation 21c.

A l'opposé de la face de maintien 34, le corps 9 comprend une zone faisant saillie constituant un élément d'accouplement 19 apte à être couplé avec l'extrémité arrière du premier 3a, ou deuxième 3b, élément structurel en étant inséré ou encore emboîté dans le logement défini par cette extrémité. L'ensemble d'éléments de support de charge comprend également les premier 4a et deuxième 4b modules de fixation avant qui sont aptes à être couplés avec les extrémités avant des première 2a et deuxième 2b barres de toit de sorte à assurer leur fixation au niveau du bord avant du pavillon 6 de la cabine du véhicule.

Sur la figure 16, chaque module de fixation avant 4a, 4b comprend un élément de protection 31, visible sur la figure 2A, lequel est assemblé au corps 10 de ce module de fixation avant 4a, 4b.

Cet élément de protection 31 de chaque module de fixation avant 4a, 4b comprend au niveau de sa face intérieure des composantes de fixation (non représentées) qui contribuent à son verrouillage sur le corps 10 de chaque module de fixation avant 4a, 4b, lorsqu'il y est monté.

Le corps 10 de chacun de ces premier 4a et deuxième 4b modules de fixation avant comprend des composantes de fixation 37 complémentaires à celles de l'élément de protection 31 et une face de liaison pourvue sur tout ou partie de sa surface, susceptible d'être en contact avec le pavillon 6, d'un revêtement 36 en matière élastomère permettant notamment de contribuer à une fixation robuste de chacun de ces premier 4a et deuxième 4b modules de fixation avant sur le pavillon 6.

Des éléments de fixation 21e permettent de fixer ce revêtement 36 au niveau de la face de liaison. D'autres éléments de fixation 21d permettent d'assurer la fixation du corps 10 de chaque module de fixation avant 4a, 4b sur la carrosserie au niveau du bord avant du pavillon 6.

Sur la figure 16, ce corps comprend en plus de cette face de liaison, des faces arrière 39 et latérale 38 qui sont communes à celles de chaque module de fixation avant 4a, 4b. L'autre face latérale de chacun de ces modules de fixation avant 4a, 4b, étant comprise au niveau de l'élément de protection 31.

La face arrière 39 du corps 10 de chaque module de fixation avant 4a, 4b comprend une zone faisant saillie qui correspond à un élément d'accouplement 20. Cet élément d'accouplement 20 est apte à être couplé avec l'extrémité avant de la première 2a, ou la deuxième 2b barre de toit en étant inséré ou encore emboîté dans le logement défini au niveau de cette extrémité.

Les éléments de fixation 21a à 21e utilisés pour l'assemblage de l'ensemble d'éléments de support de charge correspondent par exemple à des vis, des boulons d'encrages ou encore des clips de fixation.

La présente invention n'est pas limitée au mode de réalisation qui a été explicitement décrit, mais elle en inclut les diverses variantes et généralisations contenues dans le domaine des revendications ci-après.

## Revendications

1. Ensemble d'éléments de support de charge monté sur la caisse d'un véhicule comprenant des première et deuxième barres de toit (2a, 2b) et un arceau de sécurité formé de premier, deuxième et troisième éléments structurels (3a, 3b, 3c), **caractérisé en ce que** les première et deuxième barres de toit (2a, 2b) sont respectivement assemblées avec les premier et troisième éléments structurels (3a, 3c) et les deuxième et troisième éléments structurels (3b, 3c) à partir d'un module d'assemblage (1a, 1b) comprenant un corps (8) pourvu de premier et deuxième éléments d'accouplement (12a, 12b) aptes à coopérer respectivement avec une extrémité arrière de la barre de toit (2a, 2b) et une extrémité avant du premier (3a) ou du deuxième (3b) élément structurel, le module d'assemblage comprenant un troisième élément d'accouplement (12c) apte à coopérer avec une extrémité du troisième élément structurel (3c).

2. Ensemble d'éléments de support de charge selon la revendication précédente, **caractérisé en ce qu'**il comprend un support de fixation (11) agencé dans le corps (8) du module d'assemblage (1a, 1b).

3. Ensemble d'éléments de support de charge selon l'une quelconque des revendications 1 et 2, **caractérisé en ce qu'**il comprend un élément de protection (7) susceptible d'être monté sur le corps (8), lequel élément de protection (7) est pourvu de composantes de fixation aptes à coopérer avec d'autres composantes de fixation (15) complémentaires comprises dans un support de fixation (11).

4. Ensemble d'éléments de support de charge selon l'une quelconque des revendications précédentes, **caractérisé en ce que** le troisième élément d'accouplement (12c) comprend une première partie (13a) qui est apte à traverser une ouverture aménagée dans une face latérale (24) du corps (8) pour coopérer avec ladite extrémité du troisième élément structurel (3c) et une deuxième partie (13b) qui est fixée au corps (8).

5. Ensemble d'éléments de support de charge selon l'une quelconque des revendications précédentes, **caractérisé en ce que** le corps (8) et le troisième élément d'accouplement (12c) compris dans le module d'assemblage (1a, 1b) sont fixés à la caisse du véhicule à partir d'un dispositif de fixation (17) comportant notamment une vis (14) coopérant avec un écrou (16) à rattrapage de jeu.

6. Ensemble d'éléments de support de charge selon l'une quelconque des revendications précédentes, **caractérisé en ce que** des extrémités avant des première et deuxième barres de toit (2a, 2b) et des extrémités arrière des premier et deuxième éléments structurels (3a, 3b) sont respectivement reliées à la caisse à partir de premier et deuxième modules de fixation avant (4a, 4b) et arrière (5a, 5b).

7. Véhicule comprenant un ensemble d'éléments de support de charge selon l'une quelconque des revendications précédentes.

## Patentansprüche

1. Satz lasttragender Elemente, der auf der Karosserie eines Fahrzeugs angebracht ist, umfassend einen ersten und zweiten Dachträger (2a, 2b) und einen Sicherheitsbügel, gebildet von einem ersten, zweiten und dritten Strukturelement (3a, 3b, 3c), **dadurch gekennzeichnet, dass** der erste und zweite Dachträger (2a, 2b) jeweils mit dem ersten und dritten Strukturelement (3a, 3c) und das zweite und dritte Strukturelement (3b, 3c) ab einem Verbindungsmodul (1a, 1b) verbunden sind, das einen Körper (8), ausgestattet mit einem ersten und zweiten Kopplungselement (12a, 12b), umfasst, die imstande sind, jeweils mit einem hinteren Ende des Dachträgers (2a, 2b) und einem vorderen Ende des ersten (3a) oder des zweiten (3b) Strukturelements zusammenzuwirken, wobei das Verbindungsmodul ein drittes Kopplungselement (12c) umfasst, das imstande ist, mit einem Ende des dritten Strukturelements (3c) zusammenzuwirken.

2. Satz lasttragender Elemente nach dem vorangehenden Anspruch, **dadurch gekennzeichnet, dass** er einen in dem Körper (8) des Verbindungsmoduls (1a, 1b) eingerichteten Befestigungsträger (11) umfasst.

3. Satz lasttragender Elemente nach einem der Ansprüche 1 und 2, **dadurch gekennzeichnet, dass** er ein Schutzelement (7) umfasst, das auf dem Körper (8) anbringbar ist, wobei das Schutzelement (7) mit Befestigungskomponenten ausgestattet ist, die imstande sind, mit anderen komplementären Befestigungskomponenten (15) zusammenzuwirken, die in einem Befestigungsträger (11) enthalten sind.

4. Satz lasttragender Elemente nach einem der vorangehenden Ansprüche, **dadurch gekennzeichnet, dass** das dritte Kopplungselement (12c) einen ersten Teil (13a) umfasst, der imstande ist, eine Öffnung zu durchqueren, welche in einer seitlichen Fläche (24) des Körpers (8) ausgebildet ist, um mit dem Ende des dritten Strukturelements (3c) zusammenzuwirken, und einen zweiten Teil (13b), der am Körper (8) befestigt ist.

5. Satz lasttragender Elemente nach einem der vorangehenden Ansprüche, **dadurch gekennzeichnet, dass** der Körper (8) und das dritte Kopplungselement (12c), die im Verbindungsmodul (1a, 1b) enthalten sind, an der Karosserie des Fahrzeugs ab einer Befestigungsvorrichtung (17) befestigt sind, die insbesondere eine Schraube (14) aufweist, welche mit einer Spielausgleichsmutter (16) zusammenwirkt.

6. Satz lasttragender Elemente nach einem der vorangehenden Ansprüche, **dadurch gekennzeichnet, dass** vordere Enden des ersten und zweiten Dachträgers (2a, 2b) und hintere Enden des ersten und zweiten Strukturelements (3a, 3b) jeweils ab einem ersten und zweiten vorderen (4a, 4b) und hinteren (5a, 5b) Befestigungsmodul mit der Karosserie verbunden sind.

7. Fahrzeug, umfassend einen Satz lasttragender Elemente nach einem der vorangehenden Ansprüche.

## Claims

1. Load-bearing element assembly mounted on the body shell of a vehicle comprising first and second roof bars (2a, 2b) and a safety arch formed of first, second and third structural elements (3a, 3b, 3c), **characterized in that** the first and second roof bars (2a, 2b) are respectively joined to the first and third structural elements (3a, 3c) and the second and third structural elements (3b, 3c) starting from an assembly module (1a, 1b) comprising a body (8) provided with first and second coupling elements (12a, 12b) that are able to cooperate respectively with a rear end of the roof bar (2a, 2b) and a front end of the first (3a) or of the second (3b) structural element, the assembly module comprising a third coupling element (12c) that is able to cooperate with an end of the third structural element (3c).

2. Load-bearing element assembly according to the preceding claim, **characterized in that** it comprises an attachment support (11) arranged in the body (8) of the assembly module (1a, 1b).

3. Load-bearing element assembly according to either one of Claims 1 and 2, **characterized in that** it comprises a protection element (7) that can be mounted on the body (8), which protection element (7) is provided with attachment components that are able to cooperate with other, complementary attachment components (15) comprised in an attachment support (11).

4. Load-bearing element assembly according to any one of the preceding claims, **characterized in that** the third coupling element (12c) comprises a first part (13a) that is able to pass through an opening arranged in a lateral face (24) of the body (8) in order to cooperate with said end of the third structural element (3c) and a second part (13b) which is attached to the body (8).

5. Load-bearing element assembly according to any one of the preceding claims, **characterized in that** the body (8) and the third coupling element (12c) comprised in the assembly module (1a, 1b) are attached to the body shell of the vehicle starting from an attachment device (17) comprising in particular a screw (14) that cooperates with a clearance-compensating nut (16).

6. Load-bearing element assembly according to any one of the preceding claims, **characterized in that** front ends of the first and second roof bars (2a, 2b) and rear ends of the first and second structural elements (3a, 3b) are respectively connected to the body shell starting from first and second front (4a, 4b) and rear (5a, 5b) attachment modules.

7. Vehicle comprising a load-bearing element assembly according to any one of the preceding claims.
